# EUROPEAN PATENT SPECIFICATION

(11) **EP 4 467 320 B1**
(45) Date of publication and mention of the grant of the patent: **21.05.2025**
(21) Application number: 23175317.9
(22) Date of filing: 25.05.2023
(51) Int. Cl.: B29C 64/118, B29C 64/259, B33Y 10/00, B33Y 30/00

(54) **FILAMENT SPOOL DRY BOX**
FILAMENTSPULENTROCKENBOX
BOÎTE SÈCHE À BOBINE DE FILAMENT

(43) Date of publication of application: 27.11.2024
(73) Proprietor: Ting, Chung-Wu, New Taipei City 231 (TW)
(72) Inventor: Ting, Chung-Wu, New Taipei City 231 (TW)
(74) Representative: Straus, Alexander

(56) References cited:
- US-A1- 2022 388 804

## Description

### Field of the Invention

The present invention relates to a filament spool dry box for a FDM/FFF (Fused Deposition Modeling/Fused Filament Fabrication) 3D printer.

### Background of the Invention

A FDM/FFF 3D printer, using an additive manufacturing technique for rapid prototyping, is using filament to create a three-dimensional object by extruding a layer of material on top of the previous layer. The object can be made by using a number of printing materials, including PLA, PETG, ABS, PC, Nylon, etc., in filament form wound on an open spool. However, filaments often absorb moisture from the air easily due to their material properties, and the moisture in the filaments might contribute to a print failure, such as an unexpected pocket on the object when the moisture becomes steam and bubbles because of high temperature during extrusion. Therefore, it is important to prevent printing materials from absorbing moisture. And hence the requirement for a closed dry box in the market is increasing.

Furthermore, currently, the filament is wound on a disposable plastic spool. When the filament is used up, there is no recycle mechanism to reuse the spool, which results in wasting resource. Besides, filament manufacturers are producing filaments using different spool specifications; hence there is no universal reusable spool to replace the disposable spool.

In addition, in US 2022/0388804 A1, it discloses a filament spool dry box. The filament spool dry box includes a shell, a dehumidifier and a sleeve component. The shell includes a hanging structure configured to allow a bracket to be disposed in for hanging the shell. The dehumidifier is disposed inside the shell. The sleeve component is rotatably disposed inside the shell and configured to allow a filament to be disposed on. A central axis of the hanging structure is offset from and above a central axis of the sleeve component. The filament spool dry box can isolate the filament from an external environment outside the shell and remove moisture from an internal environment inside the shell by the dehumidifier. However, the filament spool dry box cannot ensure the loose filament coil or the sleeve component to rotate freely without any frictional interference at all times.

### Summary of the Invention

With this is mind, the present invention aims at providing a filament spool dry box for a FDM/FFF (Fused Deposition Modeling/Fused Filament Fabrication) 3D printer.

This is achieved by a filament spool dry box according to claim 1. The dependent claims pertain to corresponding further developments and improvements.

As will be seen more clearly from the detail description following below, the claimed filament spool dry box is for a Fused Deposition Modeling or Fused Filament Fabrication 3D printer and includes a shell, at least one engaging component, a sleeve component and a dehumidifier. The shell includes a first shell portion and a second shell portion detachably combined with the first shell portion. The first shell portion includes a first shell body, a first inner combining part, a first outer combining part and at least one first protruding column structure. The first inner combining part and the first outer combining part respectively protrude from an inner periphery of the first shell body and an outer periphery of the first shell body. A combining surface of the first inner combining part protrudes more than a combining surface of the first outer combining part. The at least one first protruding column structure protrudes from the first shell body and located between the first inner combining part and the first outer combining part. The second shell portion includes a second shell body, a second inner combining part, a second outer combining part and at least one second protruding column structure. The second inner combining part and the second outer combining part respectively protrude from an inner periphery of the second shell body and an outer periphery of the second shell body. A combining surface of the second inner combining part protrudes more than a combining surface of the second outer combining part. The at least one second protruding column structure protrudes from the second shell body and located between the second inner combining part and the second outer combining part. The first inner combining part and the second inner combining part cooperatively form a hanging structure configured to allow a bracket to be disposed in for hanging the shell. The at least one engaging component is configured to engage with the first shell portion and the second shell portion for combining the first inner combining part and the second inner combining part together in a sealing manner and combining the first outer combining part and the second outer combining part together in a sealing manner. The first shell portion and the second shell portion are deformed when the first shell portion and the second shell portion are engaged by the at least one engaging component. The sleeve component is rotatably disposed inside the shell and configured to allow a loose filament coil to be disposed on. A central axis of the hanging structure is offset from and above a central axis of the sleeve component. The dehumidifier is disposed inside the shell. The dehumidifier includes a containing case. The containing case includes a first case portion, a second case portion and at least one fastening assembly. The first case portion includes a first case body and at least one first through hole structure formed on the first case body. The second case portion includes a second case body and at least one second through hole structure formed on the second case body. The at least one fastening assembly includes a first fastening component and a second fastening component for being engaged with the first fastening component. The first fastening component passes through the at least one first through hole structure and the at least one second through hole structure along a first direction to be engaged with the second fastening component to combine the first case portion and the second case portion together. The first fastening component and the second fastening component are located between the at least one first protruding column structure and the at least one second protruding column structure and respectively abutted by the at least one first protruding column structure and the at least one second protruding column structure along the first direction for preventing the loose filament coil or the sleeve component from being over-pressed by the first shell portion or the second shell portion.

In one embodiment, the first case portion further includes at least one first slot structure located adjacent to the at least one first through hole structure and configured to receive the at least one first protruding column structure and the first fastening component, and the second case portion further includes at least one second slot structure located adjacent to the at least one second through hole structure and configured to receive the at least one second protruding column structure and the second fastening component.

In one embodiment, the at least one fastening assembly has an engaged length when the first fastening component passes through the at least one first through hole structure and the at least one second through hole structure along the first direction to be engaged with the second fastening component to combine the first case portion and the second case portion together, and a sum of a protruding length of the at least one first protruding column structure, a protruding length of the at least one second protruding column structure and the engaged length of the at least one fastening assembly is equal to a sum of a protruding length of the first inner combining part and a protruding length of the second inner combining part.

In one embodiment, the hanging structure comprises an upper guiding portion for cooperating with an upper arc-shaped portion of the sleeve component to guide a movement of the sleeve component.

In one embodiment, the first shell portion further includes a first supporting part protruding from the first shell body and located adjacent to the at least one first protruding column structure. The second shell portion further includes a second supporting part protruding from the second shell body and located adjacent to the at least one second protruding column structure, and the first supporting part and the second supporting part cooperatively form a guiding structure configured to cooperate with a lower arc-shaped portion of the sleeve component to guide a movement of the sleeve component.

In one embodiment, the first supporting part is not completely attached with the second supporting part when the first shell portion is combined with the second shell portion.

In one embodiment, the at least one first protruding column structure is located on an inner edge of the first supporting part. The at least one second protruding column structure is located on an inner edge of the second supporting part, and the dehumidifier is located between the first shell portion and the second shell portion and disposed on the guiding structure.

In one embodiment, the filament spool dry box further includes at least one bearing component rotatably disposed inside the shell and for rotatably supporting an upper arc-shaped portion of the sleeve component, and a cross section of the at least one bearing component is an internally tangent circle of a cross section of the sleeve component.

In one embodiment, the filament spool dry box further includes a sealing assembly disposed between the first shell portion and the second shell portion.

In one embodiment, the filament spool dry box further includes at least one release film disposed on at least one inner wall of the shell for reducing friction acting on the loose filament coil and/or the sleeve component.

In summary, in the present invention, the filament spool dry box can isolate the loose filament coil from an external environment outside the shell and remove moisture from an internal environment inside the shell by the dehumidifier when no discharge port of the filament spool dry box is opened to the external environment. Therefore, the filament spool dry box can prevent the loose filament coil inside the shell from absorbing moisture. Furthermore, the filament spool dry box can be placed on a horizontal supporting surface, hung on the bracket, or mounted on a vertical wall according to different requirements of a 3D printer. Besides, the configuration that the central axis of the hanging structure is offset from and above the central axis of the sleeve component can prevent an excessive swinging a rotating movement of the hung shell driven by the rotated loose filament coil with gravity during extrusion of the loose filament coil when the shell is hung on the bracket.

Moreover, when the loose filament coil inside the shell is used up, a user can replenish the loose filament coil by detaching and attaching the first shell portion and the second shell portion. Therefore, the filament spool dry box of the present application can replace conventional disposable spools and be energy saving and environmental protecting.

In addition, the filament spool dry box can prevent the loose filament coil or the sleeve component from being over-pressed by the first shell portion or the second shell portion by abutment of the first protruding column structure and the first fastening component and abutment of the second protruding column structure and the second fastening component. Therefore, the filament spool dry box can ensure the loose filament coil and/or the sleeve component to rotate freely and prevent any wear damage due to excessive friction between one of the loose filament coil and the sleeve component and one of the first shell portion and the second shell portion.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the accompanying drawings. Thereof
FIG. 1 to FIG. 3 are schematic diagrams of a filament spool dry box at different views which are not in accordance with the present invention,
FIG. 4 is a partial sectional diagram of the filament spool dry box according to the first embodiment which is not in accordance with the present invention,
FIG. 5 and FIG. 6 are exploded diagrams of the filament spool dry box at different views according to the first embodiment which is not in accordance with the present invention,
FIG. 7 is a diagram of a first shell portion according to the first embodiment which is not in accordance with the present invention,
FIG. 8 is a diagram of a second shell portion according to the first embodiment which is not in accordance with the present invention,
FIG. 9 is a sectional diagram of the first shell portion according to the first embodiment which is not in accordance with the present invention,
FIG. 10 is a sectional diagram of the second shell portion according to the first embodiment which is not in accordance with the present invention,
FIG. 11 and FIG. 12 are schematic diagrams of a filament spool dry box at different views according to a second embodiment of the present invention,
FIG. 13 is a sectional diagram of the filament spool dry box according to the second embodiment of the present invention,
FIG. 14 is a partial sectional diagram of the filament spool dry box according to the second embodiment of the present invention,
FIG. 15 and FIG. 16 are exploded diagrams of the filament spool dry box at different views according to the second embodiment of the present invention,
FIG. 17 is a diagram of a first shell portion according to the second embodiment of the present invention,
FIG. 18 is a diagram of a second shell portion according to the second embodiment of the present invention,
FIG. 19 is a sectional diagram of the first shell portion according to the second embodiment of the present invention,
FIG. 20 is a sectional diagram of the second shell portion according to the second embodiment of the present invention, and
FIG. 21 and FIG. 22 are partial diagrams of a dehumidifier at different views according to the second embodiment of the present invention.

### Detailed Description

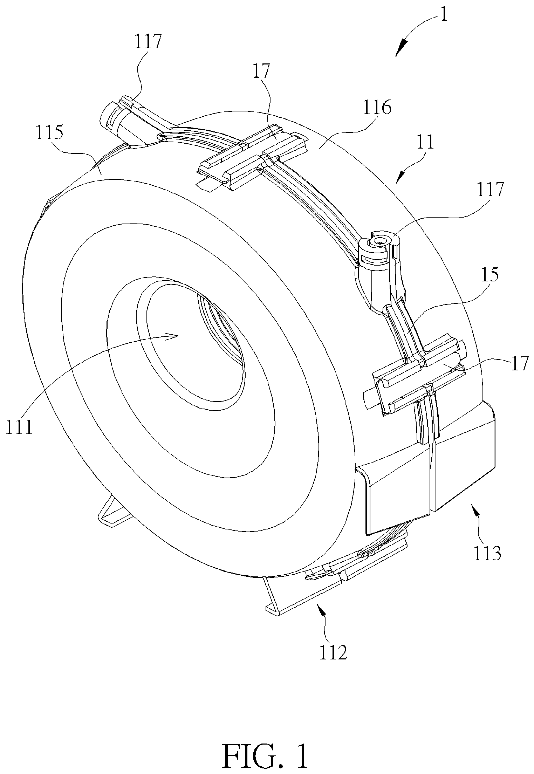

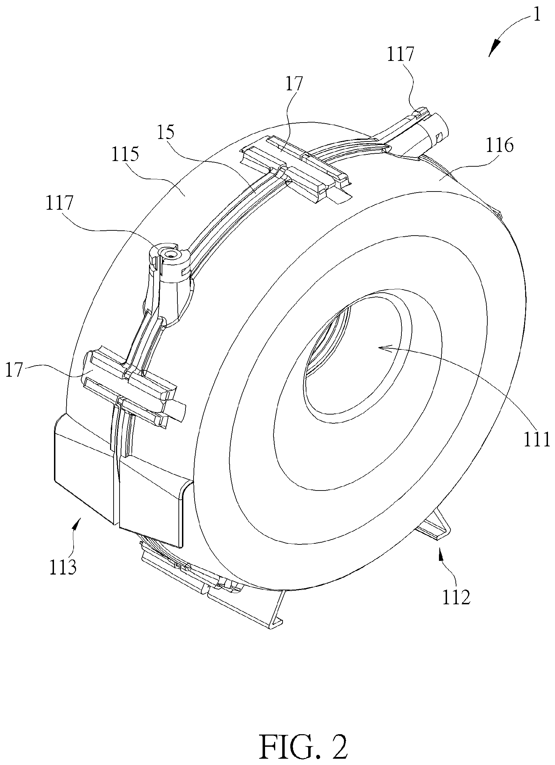

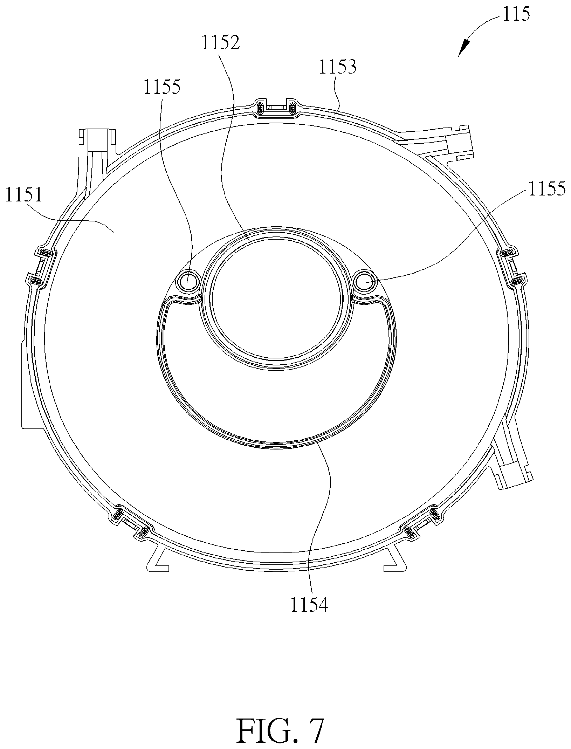

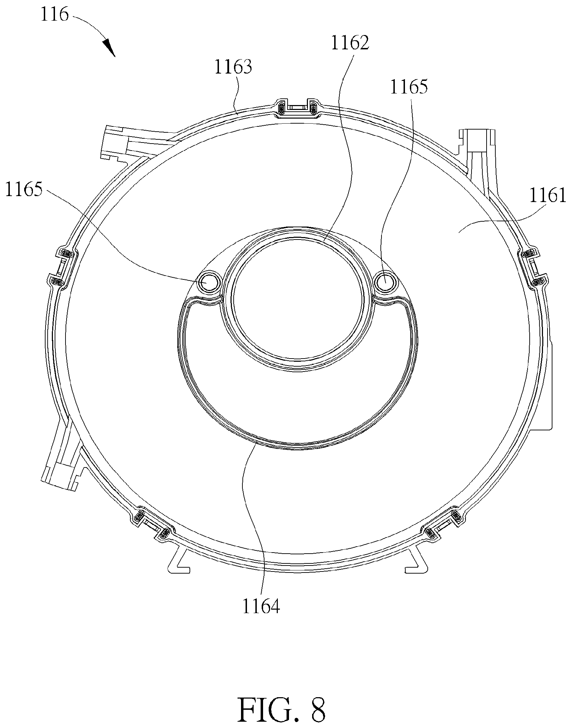

A first embodiment corresponding to FIG. 1 to FIG. 10 is not encompassed by the wording of the claims but is considered as useful for understanding the invention.

In the following detailed description of the preferred embodiments, reference is made to the accompanying drawings which form a part hereof, and in which is shown by way of illustration specific embodiments in which the invention may be practiced. In this regard, directional terminology, such as "top", "bottom", "left", "right", etc., is used with reference to the orientation of the Figure(s) being described. The components of the present invention can be positioned in a number of different orientations. As such, the directional terminology is used for purposes of illustration and is in no way limiting. Accordingly, the drawings and descriptions will be regarded as illustrative in nature and not as restrictive.

As shown in FIG. 1 to FIG. 6, in the first embodiment, a filament spool dry box 1 includes a shell 11, a dehumidifier 12 and a sleeve component 13. The shell 11 includes a hanging structure 111, a stand structure 112 and a wall mount structure 113. The hanging structure 111 is configured to allow a bracket, which is not shown in the figures, to be disposed therein for hanging the shell 11 on the bracket, so that the filament spool dry box 1 can be hung on the bracket. The stand structure 12 is configured to support the shell 11 on a horizontal supporting surface, such as a desktop or a ground surface which is not shown in the figures, so that the filament spool dry box 1 can be placed near a targeted 3D printer. The wall mount structure 113 is configured to be attached on a matching wall mount component on a vertical wall, which is not shown in the figures, so that the filament spool dry box 1 can be mounted on the vertical wall. The dehumidifier 12 is disposed inside the shell 11, more specifically inside the sleeve component 13, and can be a desiccant dehumidifier or a thermo-electric dehumidifier. The sleeve component 13 is rotatably disposed inside the shell 11 and configured to allow a loose filament coil, which is not shown in the figures, to be disposed thereon. The shell 11 can isolate the loose filament coil from an external environment outside the shell 11 when no discharge port is opened to the external environment. The dehumidifier 12 can remove moisture from an internal environment enclosed inside the shell 11. Therefore, the filament spool dry box 1 can prevent the loose filament coil from absorbing the moisture. Furthermore, a central axis of the hanging structure 111 is offset from and above a central axis of the sleeve component 13. Therefore, it prevents an excessive swinging movement of the shell 11 driven by the rotated loose filament coil on the sleeve component 13 with gravity during extrusion of the loose filament coil when the shell 11 is hung on the bracket.

Preferably, in this embodiment, the loose filament coil can be a filament coil without a disposable spool, and an outer diameter of the sleeve component 13 can be in accordance with a master-spool design.

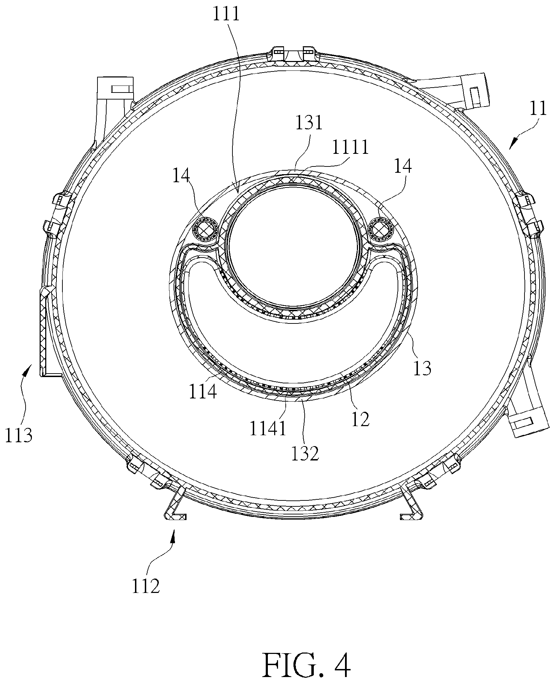

As shown in FIG. 4 to FIG. 6, in this embodiment, in order to make a rotating movement of the sleeve component 13 relative to the shell 11 smooth and stable, the hanging structure 111 can include an upper guiding portion 1111 for cooperating with an upper arc-shaped portion 131 of the sleeve component 13 to guide the rotating movement of the sleeve component. The filament spool dry box 1 further includes four bearing components 14 rotatably disposed inside the shell 11 and rotatably supporting the upper arc-shaped portion 131 of the sleeve component 13. Two of the four bearing components 14 are disposed on a right lateral side of the upper arc-shaped portion 131 of the sleeve component 13 and spaced from each other, and the other two of the four bearing components 14 are disposed on a left lateral side of the upper arc-shaped portion 131 of the sleeve component 13 and spaced from each other. A cross section of the sleeve component 13 is formed in a circular shape. A cross section of each of the bearing component is an internally tangent circle of the cross section of the sleeve component 13. Besides, the shell 11 further can include a guiding structure 114 including a lower guiding portion 1141 for cooperating with a lower arc-shaped portion 132 of the sleeve component 13 to guide the rotating movement of the sleeve component 13. Preferably, the upper guiding portion 1111 and the lower guiding portion 1141 can be two arc-shaped structures. For example, in another embodiment, the filament spool dry box can include only one bearing component rotatably supporting the lower arc-shaped portion of the sleeve component, and the cross section of the bearing component is an externally tangent circle of the cross section of the sleeve component. Alternatively, in another embodiment, the upper guiding portion or the lower guiding portion can be formed in another shape. Alternatively, in another embodiment, the upper guiding portion, the lower guiding portion and/or the bearing component can be omitted selectively.

Furthermore, as shown in FIG. 4 to FIG. 6, the dehumidifier 12 can be disposed on the guiding structure 114, and the sleeve component 13 can further include at least one aperture structure 133 for facilitating an air circulation inside the internal environment. For example, in another embodiment, the dehumidifier can be disposed on a top portion or a bottom portion of the shell outside the guiding structure, and the sleeve component can have no aperture structure or can have at least one notch structure instead of the aperture structure.

Specifically, as shown in FIG. 1 to FIG. 8, the shell 11 further includes a first shell portion 115 and a second shell portion 116 detachably combined together. The first shell portion 115 includes a first shell body 1151, a first inner combining part 1152, a first outer combining part 1153 and a first supporting part 1154. The first inner combining part 1152 and the first outer combining part 1153 respectively protrude from an inner periphery and an outer periphery of the first shell body 1151. Two first positioning structures 1155 are formed on the first shell body 1151. The two first positioning structures 1155 are located adjacent to the first inner combining part 1152 and located at two opposite sides of the first inner combining part 1152 for mounting the two corresponding bearings 14. The first supporting part 1154 protrudes from the first shell body 1151 and is located between the first inner combining part 1152 and the first outer combining part 1153. The second shell portion 116 includes a second shell body 1161, a second inner combining part 1162, a second outer combining part 1163 and a second supporting part 1164. The second inner combining part 1162 and the second outer combining part 1163 respectively protrude from an inner periphery and an outer periphery of the second shell body 1161. Two second positioning structures 1165 are formed on the second shell body 1161. The two second positioning structures 1165 are located adjacent to the second inner combining part 1162 and located at two opposite sides of the second inner combining part 1162 for mounting the other two corresponding bearings 14. The second supporting part 1164 protrudes from the second shell body 1161 and is located between the second inner combining part 1162 and the second outer combining part 1163. The first inner combining part 1152 and the first outer combining part 1153 can be directly or indirectly combined with the second inner combining part 1162 and the second outer combining part 1163 in sealing manners respectively when the first shell portion 115 is combined with the second shell portion 116. The first supporting part 1154 is not attached with the second supporting part 1164 for facilitating the air circulation inside the shell 11 to ensure the dehumidifier 12 to function properly when the first shell portion 115 is combined with the second shell portion 116. The first inner combining part 1152 and the second inner combining part 1162 cooperatively form the hanging structure 111. The first supporting part 1154 and the second supporting part 1164 cooperatively form the guiding structure 114, i.e., the first supporting part 1154 and the second supporting part 1164 are located on a right lateral side and a left lateral side of the dehumidifier 12, and an outer portion of the first supporting part 1154 adjacent to the sleeve component 13 and an outer portion of the second supporting part 1164 adjacent to the sleeve component 13 cooperatively form the lower guiding portion 1141. In another embodiment, a portion of the first supporting part 1154 can be partially attached with a portion of the second supporting part 1164.

Preferably, in this embodiment, the first shell portion 115 and the second shell portion 116 can be made of transparent material for easy observation of the loose filament coil. For example, in another embodiment, the first shell portion or the second shell portion can be provided with a see-through window.

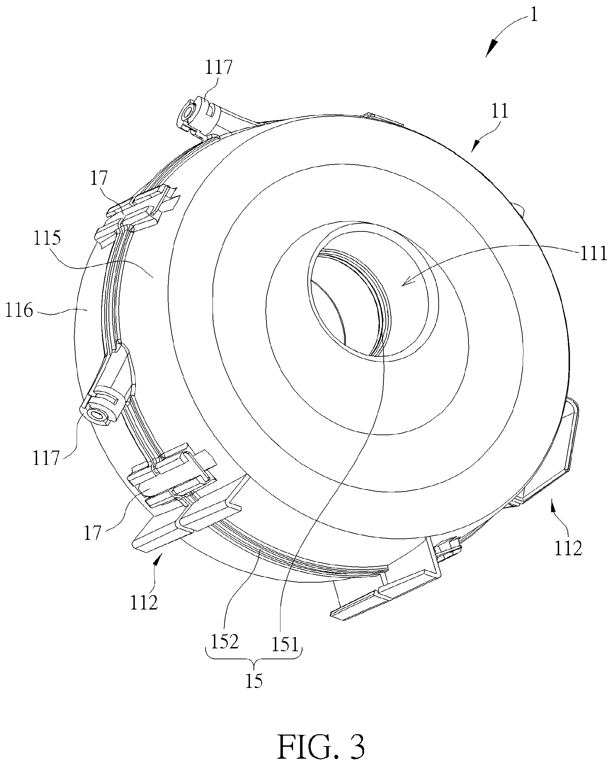

Moreover, as shown in FIG. 3 to FIG. 6, the filament spool dry box 1 further includes a sealing assembly 15 disposed between the first shell portion 115 and the second shell portion 116 and configured to prevent any convection between the internal environment and the external environment for preventing the moisture from flowing through. Specifically, the sealing assembly 15 includes an inner sealing component 151 disposed between the first inner combining part 1152 and the second inner combining part 1162, and an outer sealing component 152 disposed between the first outer combining part 1153 and the second outer combining part 1163. For example, in another embodiment, there can be only one or none of the inner sealing component and the outer sealing component, leaving two corresponding combining parts abutting each other directly.

Besides, as shown in FIG. 1 to FIG. 6, the shell 11 further includes three discharge ports 117 at different orientations, so that the loose filament coil can be configured to be discharged via a proper one of the three discharge ports 117 according to different requirements of the 3D printer. The outer sealing component 152 includes three through hole structures 1521 respectively disposed in the three discharge ports 117 and configured to allow the loose filament coil to pass through. Preferably, the filament spool dry box 1 further includes three inserts 16 respectively disposed in the three through hole structures 1521 for reducing friction acting on the discharged loose filament coil, and the inserts 16 can have different inner diameters to fit different loose filament coil diameters. For example, in another embodiment, the shell and the outer sealing component can include one discharge port and one through hole structure only, and the insert can be omitted. Furthermore, in this embodiment, the outer sealing component can be a one-piece structure. However, in another embodiment, the outer sealing component can include a plurality of sealing pieces separated from each other, i.e., neither the though hole structure nor the insert is provided, and the loose filament coil can be discharged by passing through a gap between the corresponding two sealing pieces and the corresponding discharge port.

In addition, as shown in FIG. 1 to FIG. 6, the filament spool dry box 1 further includes five engaging components 17 configured to tightly combine the first shell portion 115 with the second shell portion 116.

Specifically, as shown in FIG. 1 to FIG. 6 and FIG. 9 to FIG. 10, the five engaging components 17 are configured to engage with the first outer combining part 1153 and the second outer combining part 1163. A combining surface of the first inner combining part 1152 protrudes more than a combining surface of the first outer combining part 1153, and a combining surface of the second inner combining part 1162 protrudes more than a combining surface of the second outer combining part 1163. Such configuration allows the first shell portion 115 and the second shell portion 116 to be combined with each other tightly by the engaging components 17 only without any additional engaging component for the first inner combining part 1152 and the second inner combining part 1162. Preferably, each of the five engaging components 17 can be a latch, and the first shell portion 115 and the second shell portion 116 can be resiliently deformed by the engaging components 17 to generate a resilient force to drive the first inner combining part 1152 and the second inner combining part 1162 to be combined with each other tightly. By removing the five engaging components 17, the first shell portion 115 and the second shell portion 116 can be separated from each other easily for replenishment of the loose filament coil. For example, in another embodiment, the filament spool dry box can include only one engaging component for engaging with the first outer combining part and the second outer combining part, or engaging with the first inner combining part and the second inner combining part. Alternatively, the filament spool dry box can include a plurality of engaging components for engaging with the first outer combining part and the second outer combining part and for engaging with the first inner combining part and the second inner combining part. Alternatively, the engaging component can be omitted, and the separation of the first shell portion and the second shell portion can be prevented by any other means, such as a fastening member or a screw member.

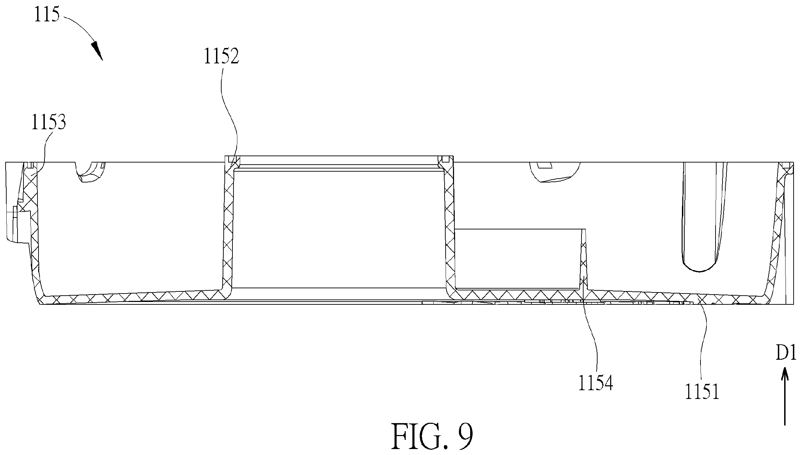

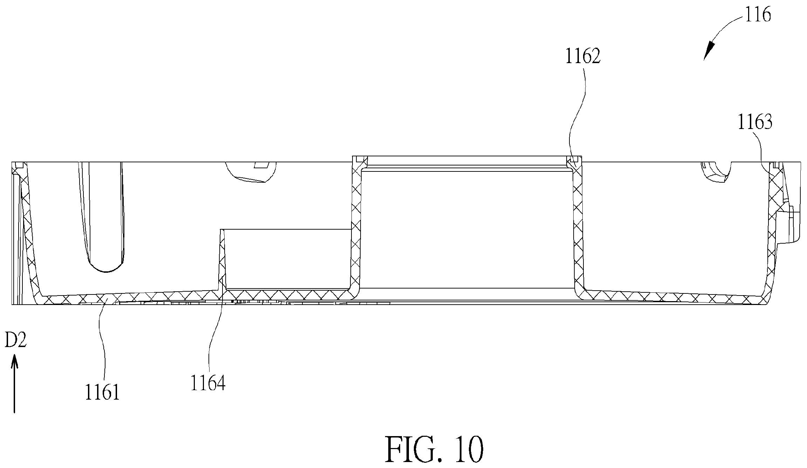

More specifically, as shown in FIG. 9 and FIG. 10, a protruding length of the first inner combining part 1152 and a protruding length of the second inner combining part 1162 can be respectively equal to a protruding length of the first outer combining part 1153 and a protruding length of the second outer combining part 1163, and the first shell body 1151 and the second shell body 1161 can be in form of inward sloping structures, so that the combining surfaces of the first inner combining part 1152 and the second inner combining part 1162 can respectively protrude more than the combining surfaces of the first outer combining part 1153 and the second outer combining part 1163. The first shell body 1151 and the second shell body 1161 can be resiliently deformed along two opposite arrow directions D1, D2 when the first outer combining part 1153 and the second outer combining part 1163 are combined together by the engaging components 17.

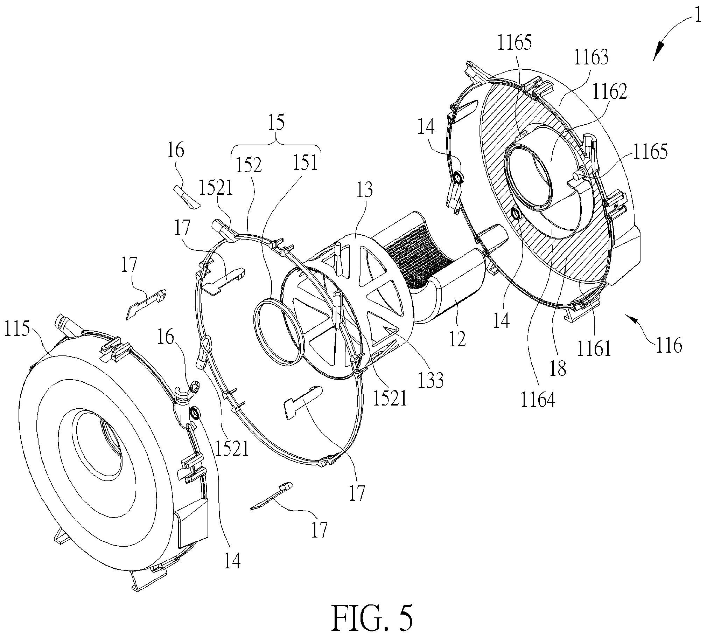

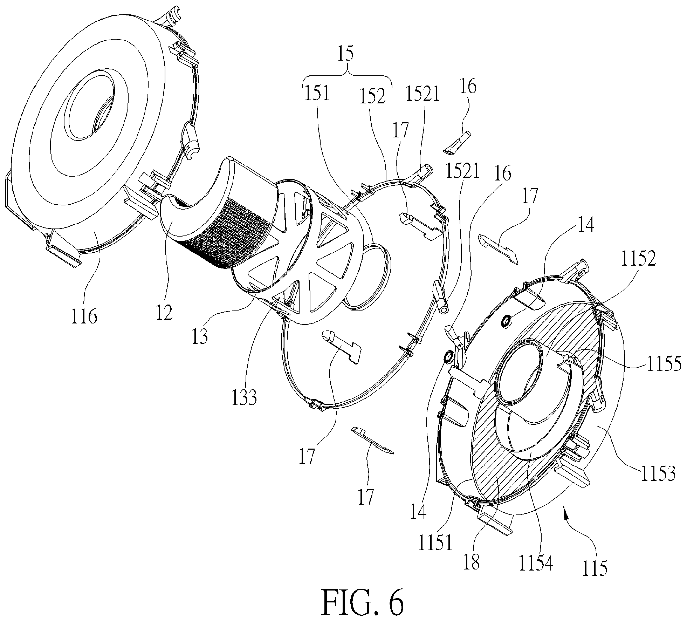

As shown in FIG. 5 and FIG. 6, the filament spool dry box 1 further includes two release films 18 disposed on an inner wall of the first shell body 1151 and an inner wall the second shell body 1161 facing toward each other. The two release films 18 can prevent the loose filament coil and/or the sleeve component 13 from contacting with the first shell body 1151 and the second shell body 1161 directly for reducing friction acting on the loose filament coil and/or the sleeve component 13, which makes the rotating movement of the loose filament coil and/or the sleeve component 13 smoother. For example, in another embodiment, the release film can be omitted. Preferably, each of the release films 18 can be a release paper made of transparent material for easy observation of the loose filament coil. In another embodiment, the release film can be made of release material, e.g., PTFE, sprayed or coated on the inner walls of the first shell body and the second shell body to reduce friction.

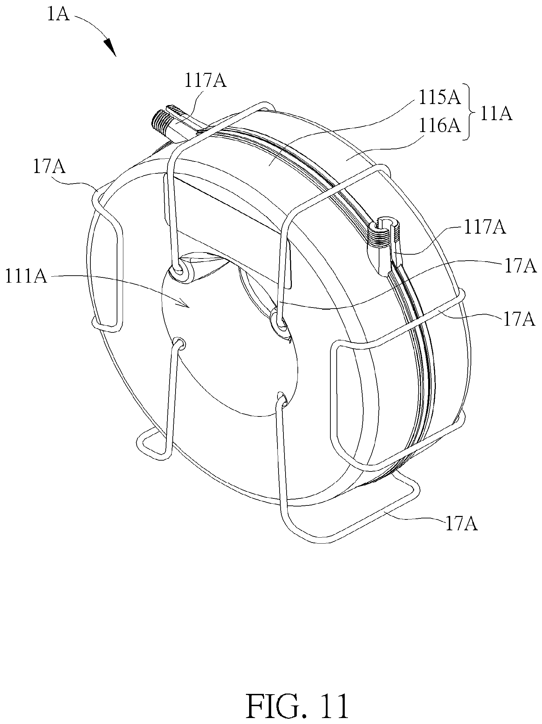

As shown in FIG. 11 to FIG. 16, in a second embodiment, a filament spool dry box 1A includes a shell 11A, a dehumidifier 12A, a sleeve component 13A and four engaging components 17A. The shell 11A includes a first shell portion 115A and a second shell portion 116A detachably combined with the first shell portion 115A. The first shell portion 115A and the second shell portion 116A can be tightly combined with each other by the four engaging components 17A. The dehumidifier 12A is disposed inside the shell 11A. The sleeve component 13A is rotatably disposed inside the shell 11A and configured to allow a loose filament coil to be disposed on, so as to allow the loose filament coil to rotate relative to the shell 11A. The shell 11A can isolate the loose filament coil from an external environment outside the shell 11A when no discharge port is opened to the external environment. The dehumidifier 12A can remove moisture from an internal environment enclosed inside the shell 11A. Therefore, the filament spool dry box 1A can prevent the loose filament coil from absorbing the moisture.

Preferably, in this embodiment, the loose filament coil is without a disposable spool, and an outer diameter of the sleeve component 13A can be in accordance with a master-spool design. However, the present invention is not limited to this embodiment.

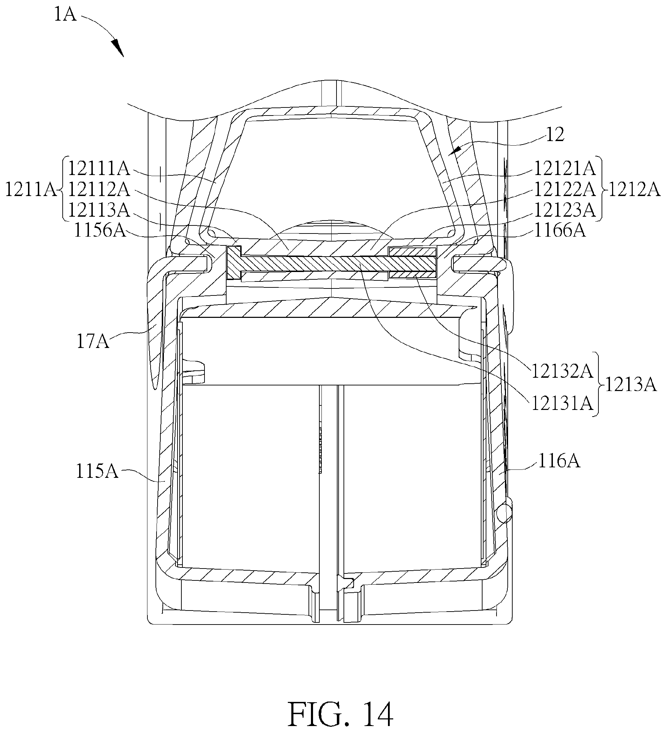

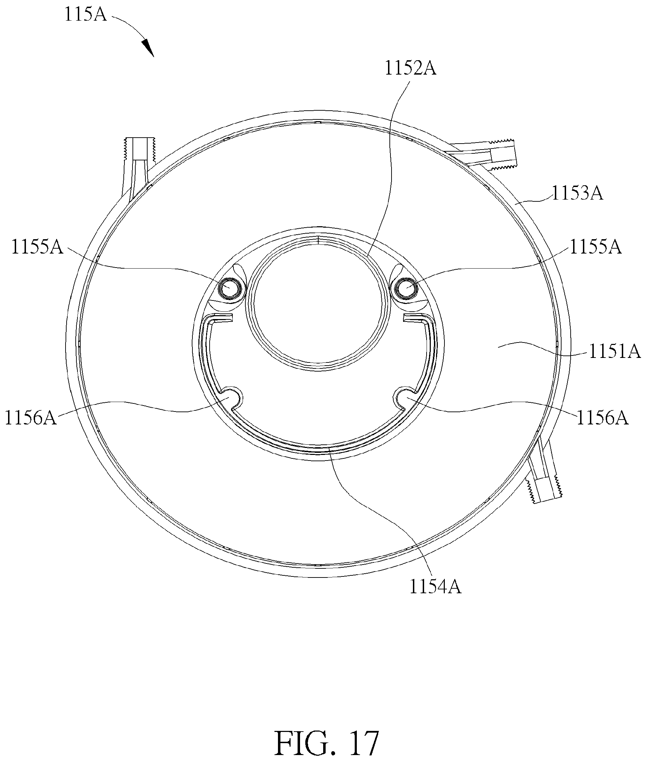

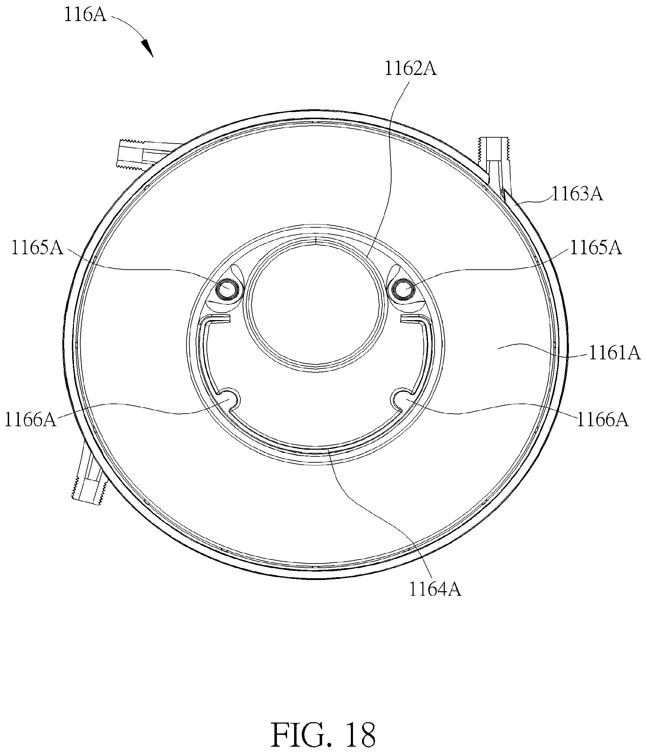

As shown in FIG. 14 to FIG. 20, the first shell portion 115A includes a first shell body 1151A, a first inner combining part 1152A, a first outer combining part 1153A and two first protruding column structures 1156A. The first inner combining part 1152A and the first outer combining part 1153A respectively protrude from an inner periphery of the first shell body 1151A and an outer periphery of the first shell body 1151A. A combining surface of the first inner combining part 1152A protrudes more than a combining surface of the first outer combining part 1153A. The two first protruding column structures 1156A protrude from the first shell body 1151A and located between the first inner combining part 1152A and the first outer combining part 1153A for abutting against the humidifier 12A. The second shell portion 116A includes a second shell body 1161A, a second inner combining part 1162A, a second outer combining part 1163A and two second protruding column structures 1166A. The second inner combining part 1162A and the second outer combining part 1163A respectively protrude from an inner periphery of the second shell body 1161A and an outer periphery of the second shell body 1161A. A combining surface of the second inner combining part 1162A protrudes more than a combining surface of the second outer combining part 1163A. The two second protruding column structures 1166A protrude from the second shell body 1161A and located between the second inner combining part 1162A and the second outer combining part 1163A for abutting against the humidifier 12A.

As shown in FIG. 11 to FIG. 13, the first inner combining part 1152A and the second inner combining part 1162A cooperatively form a hanging structure 111A configured to allow a bracket to be disposed in for hanging the shell 11A. A central axis of the hanging structure 111A is offset from and above a central axis of the sleeve component 13A, and therefore it prevents an excessive swinging movement of the shell 11A driven by the rotated loose filament coil on the sleeve component 13A with gravity during extrusion of the loose filament coil when the shell 11A is hung on the bracket.

As shown in FIG. 11 to FIG. 14, the engaging components 17A are configured to engage with the first shell portion 115A and the second shell portion 116A for combining the first inner combining part 1152A and the second inner combining part 1162A together in a sealing manner and combining the first outer combining part 1153A and the second outer combining part 1163A together in a sealing manner. The first shell portion 115A and the second shell portion 116A are deformed when the first shell portion 115A and the second shell portion 116A are engaged by the engaging components 17A.

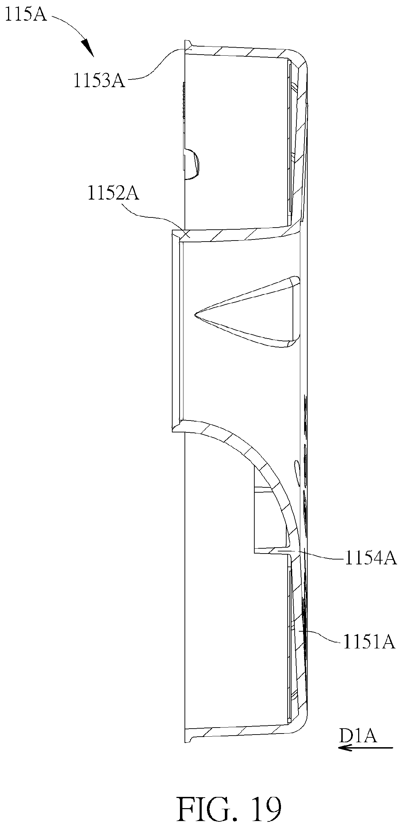

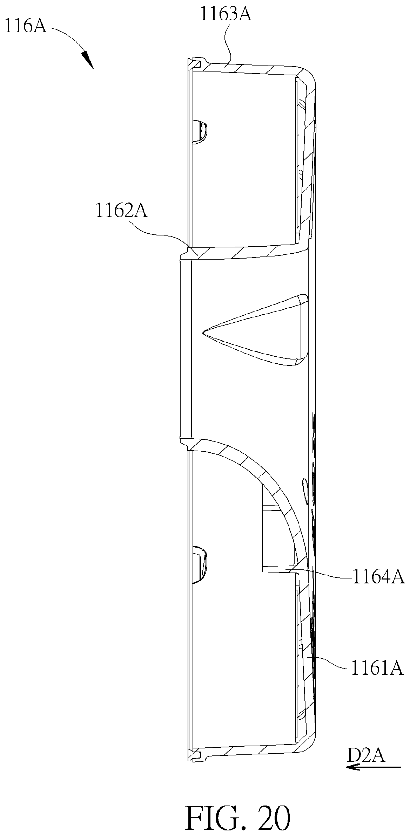

Specifically, as shown in FIG. 19 and FIG. 20, a protruding length of the first inner combining part 1152A and a protruding length of the second inner combining part 1162A can be respectively equal to a protruding length of the first outer combining part 1153A and a protruding length of the second outer combining part 1163A, and the first shell body 1151A and the second shell body 1161A can be in form of inward sloping structures, so that the combining surfaces of the first inner combining part 1152A and the second inner combining part 1162A can respectively protrude more than the combining surfaces of the first outer combining part 1153 and the second outer combining part 1163. The first shell body 1151A and the second shell body 1161A can be resiliently deformed along two opposite arrow directions D1A, D2A when the first shell portion 115A and the second shell portion 116A are combined together by the engaging components 17A.

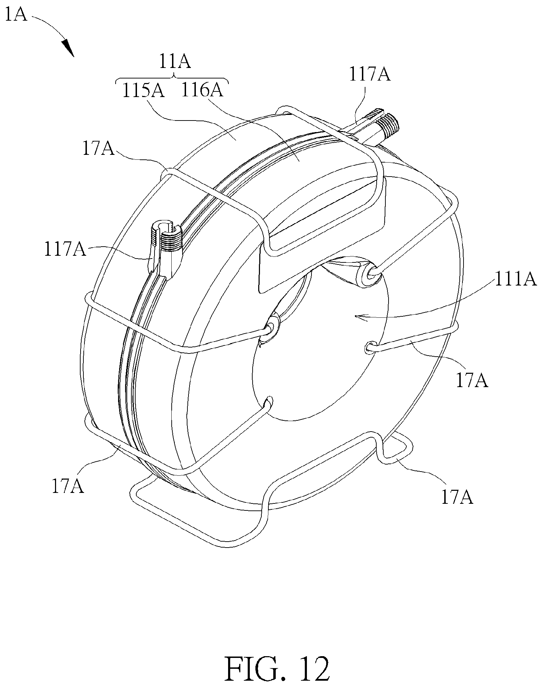

Besides, as shown in FIG. 11 and FIG. 12, in this embodiment, the lower engaging component 17A can include a standing base configured to support the shell 11A on a horizontal supporting surface, such as a desktop or a ground surface which is not shown in the figures, so that the filament spool dry box 1A can be placed near a targeted 3D printer.

Understandably, in another embodiment, one of the engaging components can include a wall mount clip configured to be attached on a matching wall mount component on a vertical wall, so that the filament spool dry box can be mounted on the vertical wall.

It should be noticed that the number of the engaging component is not limited to this embodiment. In another embodiment, the filament spool dry box can include only one engaging component for engaging with the first shell portion and the second shell portion.

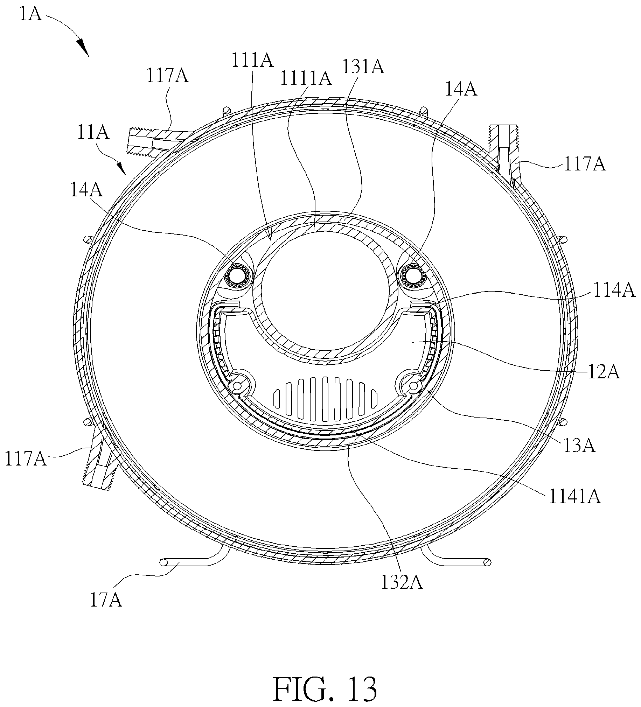

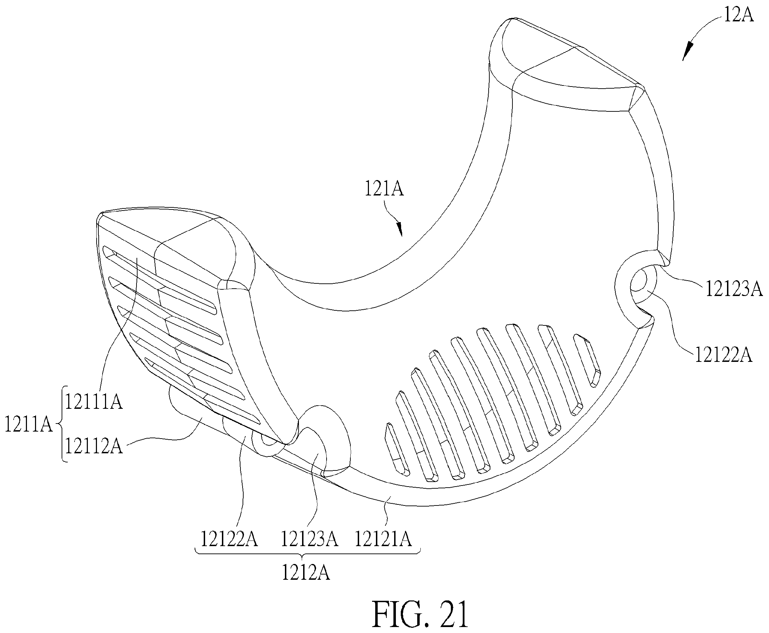

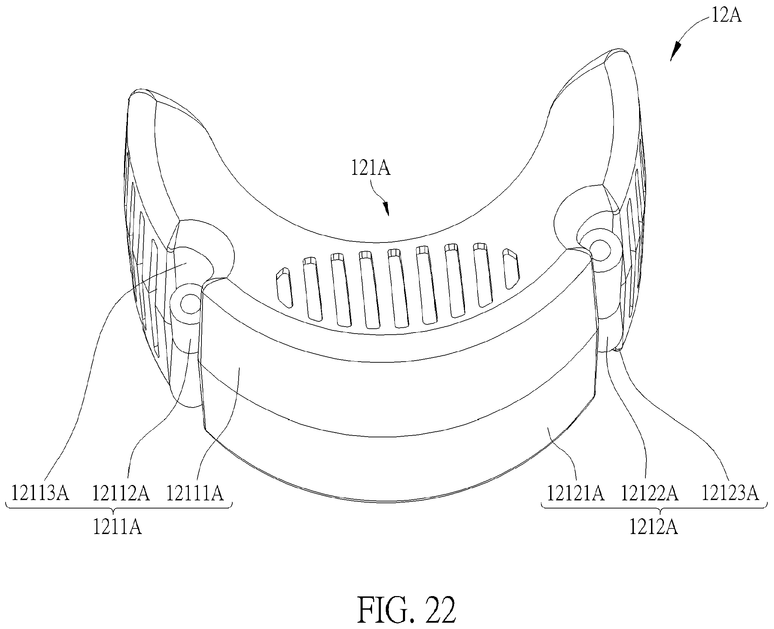

As shown in FIG. 13 to FIG. 18 and FIG. 21 to FIG. 22, the dehumidifier 12A includes a containing case 121A configured to receive replaceable desiccant. The containing case 121A includes a first case portion 1211A, a second case portion 1212A and two fastening assemblies 1213A. The first case portion 1211A includes a first case body 12111A and two first through hole structures 12112A formed on the first case body 12111A. The second case portion 1212A includes a second case body 12121A and two second through hole structures 12122A formed on the second case body 12121A. Each of the fastening assemblies 1213A includes a first fastening component 12131A and a second fastening component 12132A for being engaged with the first fastening component 12131A. The first fastening component 12131A passes through the corresponding first through hole structure 12112A and the corresponding second through hole structure 12122A along a first direction, which is parallel to the two arrow directions D1A, D2A, to be engaged with the second fastening component 12132A to combine the first case portion 1211A and the second case portion 1212A together. The first fastening component 12131A and the second fastening component 12132A are located between the corresponding first protruding column structure 1156A and the corresponding second protruding column structure 1166A and respectively abutted by the corresponding first protruding column structure 1156A and the corresponding second protruding column structure 1166A along the first direction for preventing the loose filament coil or the sleeve component 13A from being over-pressed by the first shell portion 1211A or the second shell portion 1212A, so as to prevent excessive friction between one of the loose filament coil and the sleeve component 13A and one of the first shell portion 1211A and the second shell portion 1212A to ensure the loose filament coil and/or the sleeve component 13A to rotate freely and prevent any wear damage of the loose filament coil and/or the sleeve component 13A.

In this embodiment, the first fastening component 12131A can be a bolt, and the second fastening component 12132A can be a nut for screwing with the bolt. However, the present invention is not limited to this embodiment.

Specifically, as shown in FIG. 14, the fastening assembly 1213A has an engaged length when the first fastening component 12131A passes through the corresponding first through hole structure 12112A and the corresponding second through hole structure 12122A along the first direction to be engaged with the second fastening component 12132A to combine the first case portion 1211A and the second case portion 1212A together, and a sum of a protruding length of the first protruding column structure 1156A, a protruding length of the second protruding column structure 1166A and the engaged length of the fastening assembly 1213A is equal to a sum of a protruding length of the first inner combining part 1152A and a protruding length of the second inner combining part 1162A.

Furthermore, as shown in FIG. 14 to FIG. 16 and FIG. 21 to FIG. 22, the first case portion 1211A further includes two first slot structures 12113A respectively located adjacent to the two first through hole structures 12112A and configured to receive the two first protruding column structures 1156A and the two first fastening components 12131A for positioning the two first protruding column structures 1156A and the two first fastening components 12131A, and the second case portion 1212A further includes two second slot structure 12123A respectively located adjacent to the two second through hole structures 12122A and configured to receive the two second protruding column structures 1166A and the two second fastening components 12132A for positioning the two second protruding column structures 1166A and the two second fastening components 12132A.

However, the numbers of the fastening assembly, the first protruding column structure, the second protruding column structure, the first through hole structure, the second through hole structure, the first slot structure and the second slot structure are not limited to this embodiment. For example, in another embodiment, there can be only one fastening assembly, one first protruding column structure, one second protruding column structure, one first through hole structure, one second through hole structure, one first slot structure and one second slot structure.

As shown in FIG. 13 to FIG. 15 and FIG. 17 to FIG. 18, in order to make a rotating movement of the sleeve component 13A relative to the shell 11A smooth and stable, the hanging structure 111A can include an upper guiding portion 1111A for cooperating with an upper arc-shaped portion 131A of the sleeve component 13A to guide the rotating movement of the sleeve component 13A. The filament spool dry box 1A further includes four bearing components 14A rotatably disposed inside the shell 11A and rotatably supporting the upper arc-shaped portion 131A of the sleeve component 13A. Two of the four bearing components 14A are disposed on the first shell portion 115A and spaced from each other for supporting a first lateral side, e.g., a right lateral side, of the upper arc-shaped portion 131A of the sleeve component 13A, and the other two of the four bearing components 14A are disposed on the second shell portion 116A and spaced from each other for supporting a second lateral side, e.g., a left lateral side, of the upper arc-shaped portion 131A of the sleeve component 13A. A cross section of the sleeve component 13A is formed in a circular shape. A cross section of each of the bearing component 14A is an internally tangent circle of the cross section of the sleeve component 13A. Besides, the shell 11A can further include a guiding structure 114A including a lower guiding portion 1141A for cooperating with a lower arc-shaped portion 132A of the sleeve component 13A to guide the rotating movement of the sleeve component 13A. Preferably, the upper guiding portion 1111A and the lower guiding portion 1141A can be two arc-shaped structures. However, the present invention is not limited to this embodiment. For example, in another embodiment, the filament spool dry box can include only one bearing component rotatably supporting the lower arc-shaped portion of the sleeve component, and the cross section of the bearing component is an externally tangent circle of the cross section of the sleeve component. Alternatively, in another embodiment, the upper guiding portion or the lower guiding portion can be formed in another shape. Alternatively, in another embodiment, the upper guiding portion, the lower guiding portion and/or the bearing component can be omitted selectively.

Specifically, as shown in FIG. 13 to FIG. 20, the first shell portion 115A further includes a first supporting part 1154A and two first positioning structures 1155A. The two first positioning structures 1155A are formed on the first shell body 1151A. The two first positioning structures 1155A are located adjacent to the first inner combining part 1152A and located at two opposite sides of the first inner combining part 1152A for mounting the two corresponding bearings 14A. The first supporting part 1154A protrudes from the first shell body 1151A and is located between the first inner combining part 1152A and the first outer combining part 1153A. Specifically, the first protruding column structures 1156A are located on an inner edge of the first support part 1154A. The second shell portion 116A includes a second supporting part 1164A and two second positioning structures 1165A. The two second positioning structures 1165A are formed on the second shell body 1161A. The two second positioning structures 1165A are located adjacent to the second inner combining part 1162A and located at two opposite sides of the second inner combining part 1162A for mounting the other two corresponding bearings 14A. The second supporting part 1164A protrudes from the second shell body 1161A and is located between the second inner combining part 1162A and the second outer combining part 1163A. Specifically, the second protruding column structures 1166A are located on an inner edge of the second support part 1164A. The first inner combining part 1152A and the first outer combining part 1153A can be directly or indirectly combined with the second inner combining part 1162A and the second outer combining part 1163A in sealing manners respectively when the first shell portion 115A is combined with the second shell portion 116A. The first supporting part 1154A is not attached with the second supporting part 1164A for facilitating the air circulation inside the shell 11A to ensure the dehumidifier 12A to function properly when the first shell portion 115A is combined with the second shell portion 116A. The first supporting part 1154A and the second supporting part 1164A cooperatively form the guiding structure 114A, and the dehumidifier 12A is disposed on and supported by the guiding structure 114A. In other words, the first supporting part 1154A and the second supporting part 1164A are located on a first lateral side, e.g., a right lateral side, and a second lateral side, e.g., a left lateral side, of the dehumidifier 12A, and an outer portion of the first supporting part 1154A adjacent to the sleeve component 13A and an outer portion of the second supporting part 1164A adjacent to the sleeve component 13A cooperatively form the lower guiding portion 1141A. However, the present invention is not limited to this embodiment. In another embodiment, a portion of the first supporting part can be partially attached with a portion of the second supporting part.

Preferably, in this embodiment, the first shell portion 115A and the second shell portion 116A can be made of transparent material for easy observation of the loose filament coil. However, the present invention is not limited to this embodiment. For example, in another embodiment, the first shell portion or the second shell portion can be provided with a see-through window.

It should be noticed that, in this embodiment, each of the first protruding column structures 1156A, the second protruding column structures 1166A, the first positioning structures 1155A and the second positioning structures 1165A includes a dent D which has an outward opening. The dent D can not only prevent allow a leg of the engaging component 17A to be inserted therein for making structure reasonably compact but also prevent any structural deformation caused by excessively uneven material shrinkage.

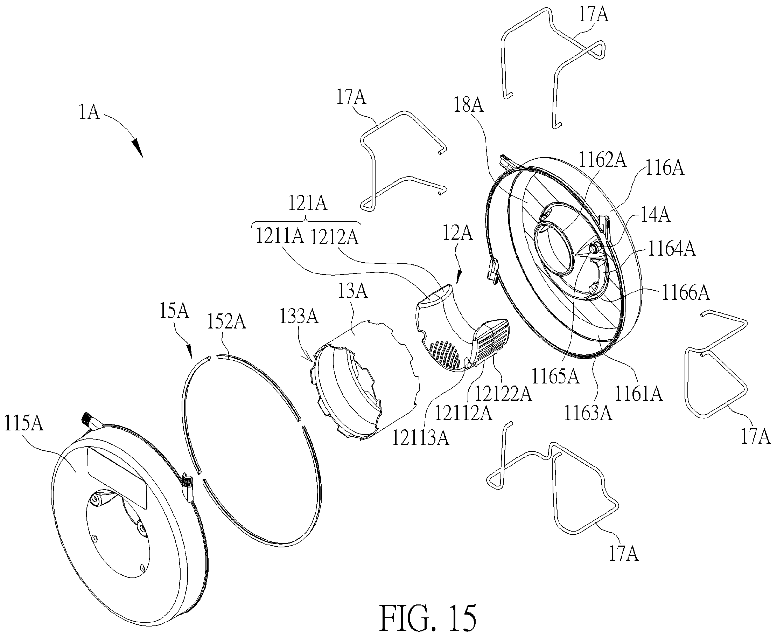

Furthermore, as shown in FIG. 15 to FIG. 16, the sleeve component 13A can further include at least one notch structure 133A for facilitating an air circulation inside the internal environment. However, the present invention is not limited to this embodiment. For example, in another embodiment, the sleeve component can have no notch structure or can have at least one aperture structure, at least one hole structure or at least one slot structure instead of the notch structure.

Moreover, as shown in FIG. 15 to FIG. 16 and FIG. 19 to FIG. 20, the filament spool dry box 1A further includes a sealing assembly 15A disposed between the first shell portion 115A and the second shell portion 116A and configured to prevent any convection between the internal environment and the external environment for preventing the moisture from flowing through when no discharge port is opened to the external environment. Specifically, in this embodiment, the sealing assembly 15A includes an outer sealing component 152A disposed between the first outer combining part 1153A and the second outer combining part 1163A, and there is no inner sealing component disposed between the first inner combining part 1152A and the second inner combining part 1162A. More specifically, the outer sealing component 152A is disposed between a groove structure of the second outer combining part 1163A and a flat structure of the first outer combining part 1153A. However, the present invention is not limited to this embodiment. For example, in another embodiment, there can be none or at least one of the inner sealing component and the outer sealing component.

Besides, as shown in FIG. 11 to FIG. 16, the shell 11A includes three discharge ports 117A at different orientations, so that the loose filament coil can be configured to be discharged via a proper one of the three discharge ports 117A according to different requirements of the 3D printer. In this embodiment, the outer sealing component 152A includes three sealing pieces separated from one another for allowing the loose filament coil to pass through a gap between the two corresponding sealing pieces and the corresponding discharge port, and there can be three connectors with inserts or caps, which are not shown in the figures, respectively disposed in the three discharge ports 117A for ensuring the discharge ports to be not opened to the external environment, wherein the inserts can have different inner diameters to fit different loose filament coil diameters.

However, the present invention is not limited to this embodiment. For example, in another embodiment, the outer sealing component can be a one-piece structure which is similar to the outer sealing component shown in FIG. 5 and FIG. 6 and includes three through hole structures respectively disposed in the three discharge ports and configured to allow the loose filament coil to pass through, and there can be three inserts respectively disposed in the three through hole structures. Alternatively, in another embodiment, the shell can include one discharge port without any insert, and the outer sealing component can be a one-piece structure with two ends separated from each other for allowing the loose filament coil to pass through a gap therebetween.

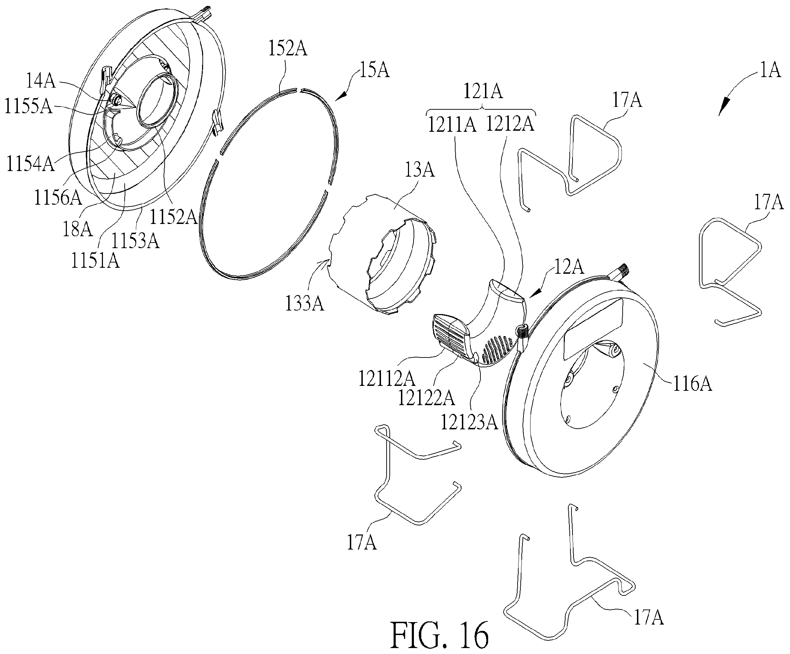

As shown in FIG. 15 and FIG. 16, the filament spool dry box 1A further includes two release films 18A disposed on an inner wall of the first shell body 1151A and an inner wall the second shell body 1161A facing toward each other. The two release films 18A can prevent the loose filament coil and/or the sleeve component 13 from contacting with the first shell body 1151A and the second shell body 1161A directly for reducing friction acting on the loose filament coil and/or the sleeve component 13A, which makes the rotating movement of the loose filament coil and/or the sleeve component 13A smoother. However, the present invention is not limited to this embodiment. For example, in another embodiment, the release film can be omitted. Preferably, each of the release films 18A can be a release paper made of transparent material for easy observation of the loose filament coil. In another embodiment, the release film can be made of release material, e.g., PTFE, sprayed or coated on the inner walls of the first shell body and the second shell body to reduce friction.

In contrast to the prior art, in the present invention, the filament spool dry box can isolate the loose filament coil from the external environment outside the shell and remove moisture from the internal environment inside the shell by the dehumidifier when no discharge port is opened to the external environment. Therefore, the filament spool dry box can prevent the loose filament coil inside the shell from absorbing moisture. Furthermore, the filament spool dry box can be placed on a horizontal supporting surface, hung on the bracket, or mounted on a vertical wall according to different requirements of the 3D printer. Besides, the configuration that the central axis of the hanging structure is offset from and above the central axis of the sleeve component can prevent an excessive swinging movement of the hung shell driven by the rotated loose filament coil with gravity during extrusion of the loose filament coil when the shell is hung on the bracket.

Moreover, when the loose filament coil inside the shell is used up, a user can replenish the loose filament coil by detaching and attaching the first shell portion and the second shell portion. Therefore, the filament spool dry box of the present application can replace conventional disposable spools and be energy saving and environmental protecting.

In addition, the filament spool dry box can prevent the loose filament coil or the sleeve component from being over-pressed by the first shell portion or the second shell portion by abutment of the first protruding column structure and the first fastening component and abutment of the second protruding column structure and the second fastening component. Therefore, the filament spool dry box can ensure the loose filament coil and/or the sleeve component to rotate freely and prevent any wear damage due to excessive friction between one of the loose filament coil and the sleeve component and one of the first shell portion and the second shell portion.

## Claims

1. A filament spool dry box (1A) for a Fused Deposition Modeling or Fused Filament Fabrication 3D printer, the filament spool dry box (1A) comprising:
a shell (11A) comprising a first shell portion (115A) and a second shell portion (116A) detachably combined with the first shell portion (115A), the first shell portion (115A) comprising a first shell body (1151A), a first inner combining part (1152A), a first outer combining part (1153A) and at least one first protruding column structure (1156A), the first inner combining part (1152A) and the first outer combining part (1153A) respectively protruding from an inner periphery of the first shell body (1151A) and an outer periphery of the first shell body (1151A), a combining surface of the first inner combining part (1152A) protruding more than a combining surface of the first outer combining part (1153A), the at least one first protruding column structure (1156A) protruding from the first shell body (1151A) and located between the first inner combining part (1152A) and the first outer combining part (1153A), the second shell portion (116A) comprising a second shell body (1161A), a second inner combining part (1162A), a second outer combining part (1163A) and at least one second protruding column structure (1166A), the second inner combining part (1162A) and the second outer combining part (1163A) respectively protruding from an inner periphery of the second shell body (1161A) and an outer periphery of the second shell body (1161A), a combining surface of the second inner combining part (1162A) protruding more than a combining surface of the second outer combining part (1163A), the at least one second protruding column structure (1166A) protruding from the second shell body (1161A) and located between the second inner combining part (1162A) and the second outer combining part (1163A), the first inner combining part (1152A) and the second inner combining part (1162A) cooperatively forming a hanging structure (111A) configured to allow a bracket to be disposed in for hanging the shell (11A);
at least one engaging component (17A) configured to engage with the first shell (11A) portion and the second shell (11A) portion for combining the first inner combining part (1152A) and the second inner combining part (1162A) together in a sealing manner and combining the first outer combining part (1153A) and the second outer combining part (1163A) together in a sealing manner, the first shell portion (115A) and the second shell portion (116A) being deformed when the first shell (11A) portion and the second shell (11A) portion are engaged by the at least one engaging component (17A);
a sleeve component (13A) rotatably disposed inside the shell (11A) and configured to allow a loose filament coil to be disposed on, a central axis of the hanging structure (111A) being offset from and above a central axis of the sleeve component (13A); and
a dehumidifier (12A) disposed inside the shell (11A), the dehumidifier (12A) comprising a containing case (121A), the containing case (121A) comprising a first case portion (1211A), a second case portion (1212A) and at least one fastening assembly (1213A), the first case portion (1211A) comprising a first case body (12111A) and at least one first through hole structure (12112A) formed on the first case body (12111A), the second case portion (1212A) comprising a second case body (12121A) and at least one second through hole structure (12122A) formed on the second case body (12121A), the at least one fastening assembly (1213A) comprising a first fastening component (12131A) and a second fastening component (12132A) for being engaged with the first fastening component (12131A), the first fastening component (12131A) passing through the at least one first through hole structure (12112A) and the at least one second through hole structure (12122A) along a first direction to be engaged with the second fastening component (12132A) to combine the first case portion (1211A) and the second case portion (1212A) together, the first fastening component (12131A) and the second fastening component (12132A) being located between the at least one first protruding column structure (1156A) and the at least one second protruding column structure (1166A) and respectively abutted by the at least one first protruding column structure (1156A) and the at least one second protruding column structure (1166A) along the first direction for preventing the loose filament coil or the sleeve component (13A) from being over-pressed by the first shell portion (115A) or the second shell portion (116A).

2. The filament spool dry box (1A) of claim 1, **characterized in that** the first case portion (1211A) further comprises at least one first slot structure (12113A) located adjacent to the at least one first through hole structure (12112A) and configured to receive the at least one first protruding column structure (1156A) and the first fastening component (12131A), and the second case portion (1212A) further comprises at least one second slot structure (12123A) located adjacent to the at least one second through hole structure (12122A) and configured to receive the at least one second protruding column structure (1166A) and the second fastening component (12132A).

3. The filament spool dry box (1A) of any of claims 1 to 2, **characterized in that** the at least one fastening assembly (1213A) has an engaged length when the first fastening component (12131A) passes through the at least one first through hole structure (12112A) and the at least one second through hole structure (12122A) along the first direction to be engaged with the second fastening component (12132A) to combine the first case portion (1211A) and the second case portion (1212A) together, and a sum of a protruding length of the at least one first protruding column structure (1156A), a protruding length of the at least one second protruding column structure (1166A) and the engaged length of the at least one fastening assembly (1213A) is equal to a sum of a protruding length of the first inner combining part (1152A) and a protruding length of the second inner combining part (1162A).

4. The filament spool dry box (1A) of any one of claims 1 to 3, **characterized in that** the hanging structure (111A) comprises an upper guiding portion (1111A) for cooperating with an upper arc-shaped portion (131A) of the sleeve component (13A) to guide a movement of the sleeve component (13A).

5. The filament spool dry box (1A) of any one of claims 1 to 4, **characterized in that** the first shell portion (115A) further comprises a first supporting part (1154A) protruding from the first shell body (1151A) and located between the first inner combining part (1152A) and the first outer combining part (1153A), the second shell portion (116A) further comprises a second supporting part (1164A) protruding from the second shell body (1161A) and located between the second inner combining part (1162A) and the second outer combining part (1163A), and the first supporting part (1154A) and the second supporting part (1164A) cooperatively form a guiding structure (114A) configured to cooperate with a lower arc-shaped portion (132A) of the sleeve component (13A) to guide a movement of the sleeve component (13A).

6. The filament spool dry box (1A) of claim 5, **characterized in that** the first supporting part (1154A) is not completely attached with the second supporting part (1164A) when the first shell portion (115A) is combined with the second shell portion (116A).

7. The filament spool dry box (1A) of claim 5, **characterized in that** the at least one first protruding column structure (1156A) is located on an inner edge of the first supporting part (1154A), the at least one second protruding column structure (1166A) is located on an inner edge of the second supporting part (1164A), and the dehumidifier (12A) is located between the first shell portion (115A) and the second shell portion (116A) and disposed on the guiding structure (114A).

8. The filament spool dry box (1A) of any one of claims 1 to 3, further **characterized by** at least one bearing component (14A) rotatably disposed inside the shell (11A) and for rotatably supporting an upper arc-shaped portion (131A) of the sleeve component (13A), and a cross section of the at least one bearing component (14A) being an internally tangent circle of a cross section of the sleeve component (13A).

9. The filament spool dry box (1A) of any one of claims 1 to 8, further **characterized by** a sealing assembly (15A) disposed between the first shell portion (115A) and the second shell portion (116A).

10. The filament spool dry box (1A) of any one of claims 1 to 9, further **characterized by** at least one release film (18A) disposed on at least one inner wall of the shell (11A) for reducing friction acting on the loose filament coil and/or the sleeve component (13A).

## Patentansprüche

1. Filamentspulen-Trockenbehälter (1A) für einen 3D-Drucker für *Fused Deposition Modeling* oder *Fused Filament Fabrication,* worin der Filamentspulen-Trockenbehälter (1A) umfasst:
eine Schale (11A), die einen ersten Schalenabschnitt (115A) und einen zweiten Schalenabschnitt (116A) umfasst, der abnehmbar mit dem ersten Schalenabschnitt (115A) kombiniert ist, worin der erste Schalenabschnitt (115A) einen ersten Schalenkörper (1151A), einen ersten inneren Kombinationsteil (1152A), einen ersten äußeren Kombinationsteil (1153A) und mindestens eine erste vorstehende Säulenstruktur (1156A) umfasst, worin der erste innere Kombinationsteil (1152A) und der erste äußere Kombinationsteil (1153A) jeweils von einem inneren Umfang des ersten Schalenkörpers (1151A) und einem äußeren Umfang des ersten Schalenkörpers (1151A) vorstehen, eine Kombinationsfläche des ersten inneren Kombinationsteils (1152A) weiter vorsteht als eine Kombinationsfläche des ersten äußeren Kombinationsteils (1153A), worin die mindestens eine erste vorstehende Säulenstruktur (1156A) von dem ersten Schalenkörper (1151A) vorsteht und zwischen dem ersten inneren Kombinationsteil (1152A) und dem ersten äußeren Kombinationsteil (1153A) angeordnet ist, worin der zweite Schalenabschnitt (116A) einen zweiten Schalenkörper (1161A), ein zweiten inneren Kombinationsteil (1162A), ein zweiten äußeren Kombinationsteil (1163A) und mindestens eine zweite vorstehende Säulenstruktur (1166A) umfasst, worin das zweite innere Kombinationsteil (1162A) und das zweite äußere Kombinationsteil (1163A) jeweils von einem Innenumfang des zweiten Schalenkörpers (1161A) und einem Außenumfang des zweiten Schalenkörpers (1161A) vorstehen, worin eine Kombinationsfläche des zweiten inneren Kombinationsteils (1162A) weiter vorsteht als eine Kombinationsfläche des zweiten äußeren Kombinationsteils (1163A), die mindestens eine zweite vorstehende Säulenstruktur (1166A) von dem zweiten Schalenkörper (1161A) vorsteht und zwischen dem zweiten inneren Kombinationsteil (1162A) und dem zweiten äußeren Kombinationsteil (1163A) angeordnet ist, worin das erste innere Kombinationsteil (1152A) und das zweite innere Kombinationsteil (1162A) zusammenwirkend eine Aufhängestruktur (111A) bilden, die ausgestaltet ist, eine Halterung zum Aufhängen der Schale (11A) darin anzuordnen;
mindestens eine Eingriffskomponente (17A), die ausgestaltet ist, mit dem ersten Schalenabschnitt (11A) und dem zweiten Schalenabschnitt (11A) in Eingriff zu kommen, um den ersten inneren Kombinationsteil (1152A) und den zweiten inneren Kombinationsteil (1162A) in einer abdichtenden Weise miteinander zu verbinden und den ersten äußeren Kombinationsteil (1153A) und den zweiten äußeren Kombinationsteil (1163A) in einer abdichtenden Weise miteinander zu verbinden, wobei, wenn der erste Schalenabschnitt (11A) und der zweite Schalenabschnitt (11A) durch das mindestens eine Eingriffselement (17A) in Eingriff gebracht werden, der erste Schalenabschnitt (115A) und der zweite Schalenabschnitt (116A) verformt werden;
eine Hülsenkomponente (13A), die drehbar innerhalb der Schale (11A) angeordnet und ausgestaltet ist, die Anordnung einer losen Fadenspule zu ermöglichen, worin eine Mittelachse der Aufhängestruktur (111A) von und oberhalb einer Mittelachse der Hülsenkomponente (13A) versetzt ist; und
einen Entfeuchter (12A), der innerhalb der Schale (11A) angeordnet ist, worin der Entfeuchter (12A) ein Aufnahmegehäuse (121A) umfasst, worin das Aufnahmegehäuse (121A) einen ersten Gehäuseabschnitt (1211A), einen zweiten Gehäuseabschnitt (1212A) und mindestens eine Befestigungsanordnung (1213A) umfasst, der erste Gehäuseabschnitt (1211A) einen ersten Gehäusekörper (12111A) und mindestens eine erste Durchgangslochstruktur (12112A) umfasst, die auf dem ersten Gehäusekörper (12111A) ausgebildet ist, worin der zweite Gehäuseabschnitt (1212A) einen zweiten Gehäusekörper (12121A) und mindestens eine zweite Durchgangslochstruktur (12122A) umfasst, die auf dem zweiten Gehäusekörper (12121A) ausgebildet ist, die mindestens eine Befestigungsanordnung (1213A) eine erste Befestigungskomponente (12131A) und eine zweite Befestigungskomponente (12132A) zum Eingriff mit der ersten Befestigungskomponente (12131A) umfasst, worin die erste Befestigungskomponente (12131A) durch die mindestens eine erste Durchgangslochstruktur (12112A) und die mindestens eine zweite Durchgangslochstruktur (12122A) entlang einer ersten Richtung hindurchgeht, um mit der zweiten Befestigungskomponente (12132A) in Eingriff gebracht zu werden, um den ersten Gehäuseabschnitt (1211A) und den zweiten Gehäuseabschnitt (1212A) miteinander zu verbinden, die erste Befestigungskomponente (12131A) und die zweite Befestigungskomponente (12132A) zwischen der mindestens einen ersten vorstehenden Säulenstruktur (1156A) und der mindestens einen zweiten vorstehenden Säulenstruktur (1166A) angeordnet sind und jeweils an der mindestens einen ersten vorstehenden Säulenstruktur (1156A) und der mindestens einen zweiten vorstehenden Säulenstruktur (1166A) entlang der ersten Richtung anliegen, um zu verhindern, dass die lose Fadenspule oder die Hülsenkomponente (13A) durch den ersten Schalenabschnitt (1156A) oder den zweiten Schalenabschnitt (116A) unter Druck gesetzt wird.

2. Filamentspulen-Trockenbehälter (1A) nach Anspruch 1, **dadurch gekennzeichnet, dass** der erste Gehäuseabschnitt (1211A) ferner mindestens eine erste Schlitzstruktur (12113A) umfasst, die neben der mindestens einen ersten Durchgangslochstruktur (12112A) angeordnet und ausgestaltet ist, die mindestens eine erste vorstehende Säulenstruktur (1156A) und das erste Befestigungselement (12131A) aufzunehmen, und der zweite Gehäuseabschnitt (1212A) ferner mindestens eine zweite Schlitzstruktur (12123A) umfasst, die benachbart zu der mindestens einen zweiten Durchgangslochstruktur (12122A) angeordnet und ausgestaltet ist, die mindestens eine zweite vorstehende Säulenstruktur (1166A) und die zweite Befestigungskomponente (12132A) aufzunehmen.

3. Filamentspulen-Trockenbehälter (1A) nach einem der Ansprüche 1 bis 2, **dadurch gekennzeichnet, dass** die mindestens eine Befestigungsanordnung (1213A) eine Eingriffslänge aufweist, wenn die erste Befestigungskomponente (12131A) durch die mindestens eine erste Durchgangslochstruktur (12112A) und die mindestens eine zweite Durchgangslochstruktur (12122A) entlang der ersten Richtung hindurchgeht, um mit der zweiten Befestigungskomponente (12132A) in Eingriff gebracht zu werden, um den ersten Gehäuseabschnitt (1211A) und den zweiten Gehäuseabschnitt (1212A) miteinander zu verbinden, und eine Summe einer vorstehenden Länge der mindestens einen ersten vorstehenden Säulenstruktur (1156A), eine vorstehende Länge der mindestens einen zweiten vorstehenden Säulenstruktur (1166A) und die Eingriffslänge der mindestens einen Befestigungsanordnung (1213A) gleich einer Summe einer vorstehenden Länge des ersten inneren Kombinationsteils (1152A) und einer vorstehenden Länge des zweiten inneren Kombinationsteils (1162A) ist.

4. Filamentspulen-Trockenbehälter (1A) nach einem der Ansprüche 1 bis 3, **dadurch gekennzeichnet, dass** die Aufhängestruktur (111A) einen oberen Führungsabschnitt (1111A) zum Zusammenwirken mit einem oberen bogenförmigen Abschnitt (131A) der Hülsenkomponente (13A) umfasst, um eine Bewegung der Hülsenkomponente (13A) zu führen.

5. Filamentspulen-Trockenbehälter (1A) nach einem der Ansprüche 1 bis 4, **dadurch gekennzeichnet, dass** der erste Schalenabschnitt (115A) ferner ein erstes Stützteil (1154A) umfasst, das aus dem ersten Schalenkörper (1151A) herausragt und zwischen dem ersten inneren Kombinationsteil (1152A) und dem ersten äußeren Kombinationsteil (1153A) angeordnet ist, der zweite Schalenabschnitt (116A) ferner ein zweites Stützteil (1164A) umfasst, das von dem zweiten Schalenkörper (1161A) vorsteht und zwischen dem zweiten inneren Kombinationsteil (1162A) und dem zweiten äußeren Kombinationsteil (1163A) angeordnet ist, und das erste Stützteil (1154A) und das zweite Stützteil (1164A) zusammenwirkend eine Führungsstruktur (114A) ausbilden, die ausgestaltet ist, mit einem unteren bogenförmigen Abschnitt (132A) der Hülsenkomponente (13A) zusammenzuwirken, um eine Bewegung der Hülsenkomponente (13A) zu führen.

6. Filamentspulen-Trockenbehälter (1A) nach Anspruch 5, **dadurch gekennzeichnet, dass** das erste Stützteil (1154A) nicht vollständig mit dem zweiten Stützteil (1164A) verbunden ist, wenn der erste Schalenabschnitt (115A) mit dem zweiten Schalenabschnitt (116A) kombiniert wurde.

7. Filamentspulen-Trockenbehälter (1A) nach Anspruch 5, **dadurch gekennzeichnet, dass** die mindestens eine erste vorstehende Säulenstruktur (1156A) an einer Innenkante des ersten Stützteils (1154A) angeordnet ist, die mindestens eine zweite vorstehende Säulenstruktur (1166A) an einer Innenkante des zweiten Stützteils (1164A) angeordnet ist, und der Entfeuchter (12A) zwischen dem ersten Schalenabschnitt (115A) und dem zweiten Schalenabschnitt (116A) angeordnet ist und auf der Führungsstruktur (114A) angeordnet ist.

8. Filamentspulen-Trockenbehälter (1A) nach einem der Ansprüche 1 bis 3, ferner **gekennzeichnet durch** mindestens eine Lagerkomponente (14A), die drehbar innerhalb der Schale (11A) angeordnet ist und zum drehbaren Stützen eines oberen bogenförmigen Abschnitts (131A) der Hülsenkomponente (13A) dient, und darin, dass ein Querschnitt der mindestens einen Lagerkomponente (14A) ein Innentangentialkreis eines Querschnitts der Hülsenkomponente (13A) ist.

9. Filamentspulen-Trockenbehälter (1A) nach einem der Ansprüche 1 bis 8, ferner **gekennzeichnet durch** eine Dichtungsanordnung (15A), die zwischen dem ersten Schalenabschnitt (115A) und dem zweiten Schalenabschnitt (116A) angeordnet ist.

10. Filamentspulen-Trockenbehälter (1A) nach einem der Ansprüche 1 bis 9, ferner **gekennzeichnet durch** mindestens eine Trennfolie (18A), die an mindestens einer Innenwand der Schale (11A) angeordnet ist, um die Reibung zu verringern, die auf die lose Filamentspule und/oder die Hülsenkomponente (13A) wirkt.

## Revendications

1. Boîte sèche pour bobine de filament (1A) pour une imprimante 3D à modélisation de dépôt par fusion ou à fabrication de filament par fusion, la boîte sèche pour bobine de filament (1A) comprenant:
une coque (11A) comprenant une première partie de coque (115A) et une deuxième partie de coque (116A) combinée de manière amovible avec la première partie de coque (115A), la première partie de coque (115A) comprenant un premier corps de coque (1151A), une première partie de combinaison intérieure (1152A), une première partie combinée extérieure (1153A) et au moins une première structure de colonne saillante (1156A), la première partie combinée intérieure (1152A) et la première partie combinée extérieure (1153A) faisant respectivement saillie à partir d'une périphérie intérieure du premier corps de coque (1151A) et d'une périphérie extérieure du premier corps de coque (1151A), une surface de combinaison de la première partie combinée intérieure (1152A) dépassant plus qu'une surface de combinaison de la première partie combinée extérieure (1153A), au moins une première structure de colonne saillante (1156A) dépassant du premier corps de carapace (1151A) et située entre la première partie combinée intérieure (1152A) et la première partie combinée extérieure (1153A), la deuxième partie de coque (116A) comprend un deuxième corps de coque (1161A), une deuxième partie de combinaison intérieure (1162A), une deuxième partie de combinaison extérieure (1163A) et au moins une deuxième structure de colonne saillante (1166A), la deuxième partie de combinaison intérieure (1162A) et la deuxième partie de combinaison extérieure (1163A) faisant respectivement saillie à partir d'une périphérie intérieure du deuxième corps de coque (1161A) et d'une périphérie extérieure du deuxième corps de coque (1161A), une surface de combinaison de la deuxième partie combinée intérieure (1162A) dépassant plus qu'une surface de combinaison de la deuxième partie combinée extérieure (1163A), au moins une deuxième structure de colonne saillante (1166A) dépassant du deuxième corps de carapace (1161A) et située entre la deuxième partie combinée intérieure (1162A) et la deuxième partie combinée extérieure (1163A), la première partie combinée intérieure (1152A) et la deuxième partie combinée intérieure (1162A) forment ensemble une structure d'accrochage (111A) configurée pour permettre à un support d'être disposé pour accrocher la coque (11A);
au moins un composant d'engagement (17A) configuré pour s'engager avec la première partie de coque (11A) et la deuxième partie de coque (11A) pour combiner la première partie de combinaison intérieure (1152A) et la deuxième partie de combinaison intérieure (1162A) ensemble de manière étanche et combiner la première partie de combinaison extérieure (1153A) et la deuxième partie de combinaison extérieure (1163A) ensemble de manière étanche, la première partie de coque (115A) et la deuxième partie de coque (116A) sont déformées lorsque la première partie de coque (11A) et la deuxième partie de coque (11A) sont engagées par l'au moins un composant d'engagement (17A);
un composant de manchon (13A) disposé de manière rotative à l'intérieur de la coque (11A) et configuré pour permettre à une bobine de filament libre d'être disposée dessus, un axe central de la structure de suspension (111A) étant décalé par rapport à l'axe central du composant de manchon (13A) et au-dessus de celui-ci; et
un déshumidificateur (12A) disposé à l'intérieur de la coque (11A), le déshumidificateur (12A) comprenant un boîtier (121A), le boîtier (121A) comprenant une première partie de boîtier (1211A), une deuxième partie de boîtier (1212A) et au moins un ensemble de fixation (1213A), la première partie de boîtier (1211A) comprenant un premier corps de boîtier (12111A) et au moins une structure de premier trou traversant (12112A) formée sur le premier corps de boîtier (12111A), la deuxième partie de boîtier (1212A) comprenant un deuxième corps de boîtier (12121A) et au moins une structure de deuxième trou traversant (12122A) formée sur le deuxième corps de boîtier (12121A), l'au moins un ensemble de fixation (1213A) comprenant un premier composant de fixation (12131A) et un second composant de fixation (12132A) destiné à être engagé avec le premier composant de fixation (12131A), le premier élément de fixation (12131A) traverse la structure à au moins un premier trou traversant (12112A) et la structure à au moins un deuxième trou traversant (12122A) le long d'une première direction pour être engagé avec le deuxième élément de fixation (12132A) afin d'assembler la première partie du boîtier (1211A) et la deuxième partie du boîtier (1212A), le premier composant de fixation (12131A) et le second composant de fixation (12132A) étant situés entre au moins une première structure de colonne saillante (1156A) et au moins une seconde structure de colonne saillante (1166A) et respectivement en butée contre au moins une première structure de colonne saillante (1156A) et au moins une seconde structure de colonne saillante (1166A) le long de la première direction pour empêcher la bobine de filament libre ou le composant de manchon (13A) d'être sur-pressé par la première partie de coque (115A) ou la deuxième partie de coque (116A).

2. Boîte sèche pour bobine de filament (1A) de la revendication 1, **caractérisée en ce que** la première partie du boîtier (1211A) comprend en outre au moins une première structure de fente (12113A) située à côté de l'au moins une première structure de trou traversant (12112A) et configurée pour recevoir l'au moins une première structure de colonne saillante (1156A) et le premier composant de fixation (12131A), et la deuxième partie du boîtier (1212A) comprend en outre au moins une deuxième structure de fente (12123A) située à côté d'au moins une deuxième structure de trou traversant (12122A) et configurée pour recevoir au moins une deuxième structure de colonne saillante (1166A) et le deuxième composant de fixation (12132A).

3. Boîte sèche pour bobine de filament (1A) de l'une quelconque des revendications 1 à 2, **caractérisée en ce que** l'au moins un ensemble de fixation (1213A) a une longueur engagée lorsque le premier composant de fixation (12131A) traverse l'au moins une structure de premier trou traversant (12112A) et l'au moins une structure de deuxième trou traversant (12122A) le long de la première direction pour être engagé avec le deuxième composant de fixation (12132A) afin de combiner la première partie de boîtier (1211A) et la deuxième partie de boîtier (1212A) ensemble, et la somme de la longueur en saillie d'au moins une première structure de colonne saillante (1156A), de la longueur en saillie d'au moins une deuxième structure de colonne saillante (1166A) et de la longueur engagée d'au moins un ensemble de fixation (1213A) est égale à la somme de la longueur en saillie de la première partie combinée intérieure (1152A) et de la longueur en saillie de la deuxième partie combinée intérieure (1162A).

4. Boîte sèche pour bobine de filament (1A) de l'une quelconque des revendications 1 à 3, **caractérisée en ce que** la structure de suspension (111A) comprend une partie de guidage supérieure (1111A) destinée à coopérer avec une partie supérieure en forme d'arc (131A) du composant de manchon (13A) pour guider un mouvement du composant de manchon (13A).

5. Boîte sèche pour bobine de filament (1A) de l'une quelconque des revendications 1 à 4, **caractérisée en ce que** la première partie de coque (115A) comprend en outre une première partie de support (1154A) faisant saillie du premier corps de coque (1151A) et située entre la première partie de combinaison intérieure (1152A) et la première partie de combinaison extérieure (1153A), la deuxième partie de coque (116A) comprend en outre une deuxième partie de support (1164A) faisant saillie du deuxième corps de coque (1161A) et située entre la deuxième partie de combinaison intérieure (1162A) et la deuxième partie de combinaison extérieure (1163A), et la première partie de support (1154A) et la deuxième partie de support (1164A) forment ensemble une structure de guidage (114A) configurée pour coopérer avec une partie inférieure en forme d'arc (132A) du composant de manchon (13A) afin de guider un mouvement du composant de manchon (13A).

6. Boîte sèche pour bobine de filament (1A) de la revendication 5, **caractérisée en ce que** la première partie de support (1154A) n'est pas complètement fixée à la deuxième partie de support (1164A) lorsque la première partie de coque (115A) est combinée à la deuxième partie de coque (116A).

7. Boîte sèche pour bobine de filament (1A) de la revendication 5, **caractérisée en ce que** l'au moins une première structure de colonne saillante (1156A) est située sur un bord intérieur de la première partie de support (1154A), l'au moins une deuxième structure de colonne saillante (1166A) est située sur un bord intérieur de la deuxième partie de support (1164A), et le déshumidificateur (12A) est situé entre la première partie de coque (115A) et la deuxième partie de coque (116A) et disposé sur la structure de guidage (114A).

8. Boîte sèche pour bobine de filament (1A) de l'une quelconque des revendications 1 à 3, **caractérisée en outre par** au moins un composant de roulement (14A) disposé de manière rotative à l'intérieur de la coque (11A) et destiné à supporter de manière rotative une partie supérieure en forme d'arc (131A) du composant de manchon (13A), et une section transversale du au moins un composant de roulement (14A) étant un cercle tangent à l'intérieur d'une section transversale du composant de manchon (13A).

9. Boîte sèche pour bobine de filament (1A) de l'une quelconque des revendications 1 à 8, **caractérisée en outre par** un ensemble d'étanchéité (15A) disposé entre la première partie de coque (115A) et la deuxième partie de coque (116A).

10. Boîte sèche pour bobine de filament (1A) de l'une quelconque des revendications 1 à 9, **caractérisée en outre par** au moins un film antiadhésif (18A) disposé sur au moins une paroi intérieure de la coque (11A) pour réduire le frottement agissant sur la bobine de filament et/ou sur le composant de manchon (13A).
